# EUROPEAN PATENT SPECIFICATION

(11) **EP 1 404 464 B1**
(45) Date of publication and mention of the grant of the patent: **08.12.2004**
(21) Application number: 02747565.6
(22) Date of filing: 08.07.2002
(51) Int. Cl.: B08B 9/055, G21C 17/017

(54) **DECONTAMINATION OF PIPEWORK**
DEKONTAMINATION VON ROHRLEITUNGEN
DECONTAMINATION DE TUYAUTERIES

(30) Priority: 10.07.2001 GB 0116826
(43) Date of publication of application: 07.04.2004
(73) Proprietor: British Nuclear Fuels PLC, Warrington, Cheshire WA3 6AS (GB)
(72) Inventor: GREANEY, Ian, British Nuclear Fuels Plc, Cumbria CA20 1PG (GB); HILTON, David Nigel, British Nuclear Fuels Plc, Cumbria CA20 1PG (GB); QUARINI, Giuseppe L., Dept of Mechanical Engin., Bristol, Avon BS8 1TR (GB)
(74) Representative: Harrison Goddard Foote
(86) International application number: PCT/GB2002/003107
(87) International publication number: WO 2003/006185

(56) References cited:
- WO-A-00/63606
- WO-A-01/51224
- US-A- 3 057 758
- US-A- 3 676 091
- US-A- 4 724 007
- US-A- 4 895 602
- US-A- 5 433 236
- US-A- 5 640 734

## Description

The present invention concerns a method for the decontamination of pipework and the descaling of heat exchangers in the nuclear industry. Specifically, the method provides a cheap and efficient means of achieving decontamination and descaling whilst avoiding many of the difficulties associated with prior art technology. In addition, the technique allows for the ready clearance of partial blockages which commonly occur in convoluted pipework.

The technique of "pigging" is well known, particularly in the fields of oil and gas recovery and distribution. The technique involves driving a solid body or device shaped to fit a pipeline interior - known as a "pig" - along the pipe under pressure. The pig may have scrapers or brushes to shift contaminants from the interior surface of the pipeline - as, for example, disclosed in US-A-5457841 and US-A-5903945 - or it may be adapted to absorb or otherwise take up debris in the pipeline, in the manner described in US-A-4216026. Alternatively, the pig may be constructed wholly or partly from an elastically deformable material which is able to pass bends and other irregularities in the pipework without damage, whilst maintaining firm contact with the surface of the pipe, and such a device is discussed in US-A-4389461 and US-A-5924158. Another adaptation of the technique - disclosed in US-A-4898197 and US-A-4724007 - proposes the use of a solid bullet of ice as a pig, on the basis that this will disintegrate spontaneously and harmlessly if it becomes lodged in the pipes. The use of a self-sustaining gelled mass, made by gelling a hydrocarbon, is yet another alternative that has been considered.

It is also known, from US-A-4860821, that pigs may be employed in the cleaning of heat exchanger tubes which suffer from the accumulation of internal residues from manufacture or during use.

More conventionally, however, the majority of piping systems are cleaned by direct methods such as brushing and/or flushing with cleaning liquids, since these are much easier to control than pigs, and also far cheaper. Furthermore, pigs suffer from several other drawbacks associated with their physical nature, which naturally prevents their use in situations wherein pipes having substantially varying cross-section, or including internal obstructions, require cleaning. In such situations, it is necessary to employ liquids for cleaning the pipework.

The present invention seeks to provide means by which the limitations associated with the pigs of the prior art may be overcome. Thus, the invention seeks to provide pigging means which may be employed in the cleaning or decontamination of pipes or other channels having substantially varying cross-section, or including internal obstructions, valves and the like, said pigging means also showing considerable economic advantages over the known devices of the prior art. The invention also seeks to provide an efficient means for the clearance of partial blockages within such pipework. Specifically, the invention is directed towards the cleaning, decontamination and unblocking of fluid channels, heat exchangers and the like which are employed in the nuclear industry and used in the processing of radioactive materials.

Thus, according to the present invention there is provided a method for the decontamination of the interior of a fluid flow channel used in the processing of radioactive materials, wherein a fluid, mass or agglomerate, consisting essentially of solid particles cohering by means of a wetting liquid, is caused to pass along the channel in contact with its interior surface.

The decontamination process is envisaged as including the removal of solid material or deposits from the fluid flow channel which may otherwise result in the partial blockage thereof.

In the present context, a fluid flow channel may comprise any conduit, pipe or other vessel of reasonably small cross section used in the transport of radioactive, materials. Furthermore, the invention is also applicable to the descaling of trace active plate heat exchangers. Hence, the invention also provides a method for the descaling of a trace active plate heat exchanger used in the processing of radioactive materials, wherein a fluid, mass or agglomerate, consisting essentially of solid particles cohering by means of a wetting liquid, is caused to pass through the heat exchanger in contact with its interior surface. In addition, the method of the invention finds particular application for the cleaning of pipework used to deliver cement grout, such as is typically found in radioactive waste encapsulation plants.

Preferred wetting liquids in the context of the present invention are aqueous wetting liquids, and it is desired that the wetting liquid should wet the interior surface of the channel or of the heat exchanger so that the solid particles are able to slide over the surface.

A preferred mode of implementing the method of the invention is by the use of a fluid, mass or agglomerate of a mixture of solid particles with a wetting liquid which is, consists essentially of, or comprises a melt liquid derived from the solid of the solid particles. Such a mixture may, for example, be conveniently prepared by comminuting the solid and using it at a temperature near its melting point.

A particularly preferred mixture in this context comprises a mass of comminuted ice. Such a mixture - or ice pig - shows many advantages over the teachings of the prior art. Thus, it is found to be sufficiently flowable, plastic and divisible to pass readily through channels of many different shapes and sizes, to flow past internal obstructions and through valves, and to negotiate the branching or merging of channels. Specifically, it is found that an ice pig is capable of passing through an orifice plate having a flow area which is 10% of the flow area of a connected channel, then reforming to its original conformation immediately after negotiating the orifice, whereas a conventional pig can typically only negotiate a 35% reduction in area. It is also sufficiently coherent, by virtue of its own meltwater, that it does not disintegrate or disperse in the channel. However, in the event that an ice pig should become lodged in a channel, it will obviously not lead to a permanent obstruction in the system, since it will eventually melt and flow away. Additionally, of course, ice has the significant advantages of low cost, and ease and safety of preparation.

Ice pigs are found to be especially valuable for use in the nuclear industry where the apparatus to be decontaminated or descaled is in contact with radioactive materials, and an efficient cleaning effect is particularly important. The fact that the process generates minimal secondary waste is of major significance. Furthermore, the ability of the method of the invention to facilitate thorough cleaning of all parts of the channels is especially advantageous and allows for the cleaning process to be carried out at much lower cost, and with greater efficiency, than the known cleaning methods of the prior art. This ability of an ice-pig to mould itself to any topology is seen to be of especial benefit in the case of heat exchangers wherein, in the nuclear industry, hot spent fuel flows down between alternate plates, and cold fluid flows up between adjacent, alternate plates. However, the degree of clearance between plates is small, and often uneven, but the use of an ice-pig allows for the efficient descaling of such apparatus to be successfully achieved.

It will be appreciated that the best results are obtained with the method of the present invention when the process is carried out with a mixture of water and ice, since it is clear that a solid block of ice would suffer from the same problems which are associated with the conventional pigs of the prior art. It is preferred, therefore, that a freezing point depressant should be included in the water used to make the ice. This increases the range of temperature over which coexistent water and ice can persist. Typical compounds which are of use in this context include salt and sugar.

It is also possible to envisage the use of a mass of frozen particles wetted by the melt liquid which comprise other than ordinary ice; thus, for example, a mixture comprising a frozen organic solvent may also be used.

The use of an ice pig in combination with certain chemical decontaminants is also envisaged within the scope of the present invention. As particular examples of materials which are found to be useful in this context may be mentioned solutions of nitric acid, ethylenediaminetetraacetic acid (EDTA) and citric acid.

The ease of use of the method of the invention is further enhanced by the fact that factors such as particle size and solid:liquid ratio are not critical to its success. The only criteria which have to be met in relation to these parameters are that the largest particle in the agglomerate should be capable of fully passing through the system, and that the mass is sufficiently coherent to move as a body through the system.

The speed at which the mass is driven through the system is also not limited, other than by the parameters of the system under consideration. As an example of potential values which may be appropriate, the range from 0.05 to 5.0 m/s might be quoted.

Typically, the method involves the use of a dense slurry of ice particles, of typical average diameter 1.0 mm, which is forced by pressure down a fluid flow channel and is thereby able to act as a perfect piston, since it is capable of conforming exactly to any variations in channel cross-section or configuration, thereby allowing for the formation of a perfect seal against the walls of the channel. The potential use of the technique for the removal of partial blockages within fluid flow channels thus becomes apparent

Particular examples of the use of the method of the invention include instances wherein debris may be attached in significant quantities to the walls of a fluid flow channel, or may be coalesced together within the channel, in either case to result in a partial blockage of the channel. In such cases it may not be practically possible to remove the material by simple physical means such as the use of rods in view of the geometry of the system. Additionally, the use of particular chemical means may be significantly disadvantageous - or even impossible - in view of regulatory requirements for waste disposal; specifically, this may apply in the case of, for example, a dip leg of a tank used for the storage of highly active waste.

The latter situation highlights the unique challenges faced within the nuclear industry, wherein the cleaning and decontamination of fluid flow channels involves not only the general considerations associated with the removal of contaminants in the regular process industries, but also the complications introduced by the presence of radiation. Thus, for example, it is desirable - and often necessary - that the volume of cleaning fluid should be kept to a minimum, so as not to generate additional waste, since the costs associated with the disposal of such material escalate rapidly with volume. The specific use, in particular, of ice does, however, provide clear advantages in this regard, since the cleaning material is, in itself, non-toxic and harmless.

The method of the invention also allows for the delivery of the fluid, mass or agglomerate, consisting essentially of solid particles cohering by means of a wetting liquid - the preferred example being an ice pig - at a point some distance from the site of a blockage. This offers significant advantages, since the alternative may involve intervention by breaking into a channel close to the blockage site, which could be both costly and hazardous.

The general costs benefits and ease of use associated with the method of the invention allow for the regular maintenance of systems that might otherwise suffer from a degree of neglect. Again, this is of particular importance in the nuclear industry where the maintenance of low levels of radioactivity is a paramount consideration for reasons of safety. The risks of blockages occurring in these systems is consequently reduced as a result of the high standards of cleanliness that are applied. Thus, the use of this simple and highly efficient technique ensures that plant throughput is maximised since the downtime which could otherwise result from both planned and unplanned outages is greatly reduced.

As specific examples of the use of the technique of ice pigging in the nuclear industry may be mentioned the following:
1) The general cleaning and decontamination of pipework used in the reprocessing of spent nuclear fuel.
2) The removal of partial blockages of solid particles which occur in convoluted pipework during reprocessing, including:
   (a) The removal of cement grout from pipework in encapsulation plants after the grout has been fed into drums of industrial liquid waste (the grout being radiochemically inactive, but being added to active waste and used in an active plant); and
   (b) The removal of deposits following the feeding of highly concentrated radioactive liquor - which has an amorphous solids content and is also prone to crystallisation - to a vitrefication plant.
3) The descaling of pipework in trace active heat exchangers used in the processing of radioactive materials, and particularly of pond water used for the cooling and storage of spent nuclear fuel.

## Claims

1. A method for the decontamination of the interior of a fluid flow channel used in the processing of radioactive materials, wherein a fluid, mass or agglomerate, consisting essentially of solid particles cohering by means of a wetting liquid, is caused to pass along the channel in contact with its interior surface.

2. A method as claimed in claim 1 wherein the particles and wetting liquid are aqueous.

3. A method as claimed in claim 2 wherein the particles are ice particles.

4. A method as claimed in any of claims 1 to 3 wherein the wetting liquid is, consists essentially of, or comprises a melt liquid derived from the solid of the solid particles.

5. A method as claimed in any preceding claim wherein the wetting agent contains a freezing point depressant.

6. A method as claimed in claim 5 wherein said freezing point depressant comprises salt or sugar.

7. A method as claimed in any preceding claim wherein the particles comprise a frozen organic solvent

8. A method as claimed in any preceding claim wherein the fluid, mass or agglomerate is driven through the system at a speed in the range from 0.05 to 5.0 m/s.

9. A method as claimed in claim 3 wherein the ice particles have an average diameter of 1.0 mm.

10. A method as claimed in any preceding claim wherein the fluid, mass or agglomerate additionally comprises a chemical decontaminant.

11. A method as claimed in claim 10 wherein the chemical decontaminant comprises nitric acid, ethylenediaminetetraacetic acid or citric acid.

12. A method as claimed in any preceding claim which comprises the cleaning and decontamination of pipework used in the reprocessing of spent nuclear fuel.

13. A method as claimed in any preceding claim which comprises the removal of partial blockages of solid particles which occur in convoluted pipework during reprocessing

14. A method as claimed in claim 13 which comprises the removal of cement grout from pipework in encapsulation plants after feeding of the grout into drums of industrial liquid waste

15. A method as claimed in claim 13 which comprises the removal of deposits following the feeding of highly concentrated radioactive liquor to a vitrefication plant.

16. A method as claimed in any preceding claim which comprises the descaling of a trace active plate heat exchanger used in the processing of radioactive material.

17. A method as claimed in claim 16 wherein the radioactive material comprises cooling water used in a pond for the storage of spent nuclear fuel.

## Patentansprüche

1. Verfahren zur Dekontamination des Innenbereichs eines Strömungskanals für ein Fluid, der bei der Verarbeitung von radioaktiven Materialien verwendet wird, bei dem ein Fluid, eine Masse oder ein Agglomerat, bestehend im wesentlichen aus festen Teilchen, die mittels einer nässenden Flüssigkeit zusammenhängen, gedrängt wird, entlang des Kanals in Kontakt mit dessen inneren Fläche zu fließen.

2. Verfahren wie in Anspruch 1 beansprucht, bei dem die Teilchen und die nässende Flüssigkeit wäßrig sind.

3. Verfahren wie in Anspruch 2 beansprucht, bei dem die Teilchen Eisteilchen sind.

4. Verfahren wie in einem der Ansprüche 1-3 beansprucht, bei dem die nässende Flüssigkeit aus einer von dem Festkörper der festen Teilchen hergeleiteten Schmelzflüssigkeit gebildet, im wesentlichen aus dieser Schmelzflüssigkeit besteht oder diese Schmelzflüssigkeit umfaßt.

5. Verfahren wie in einem der vorhergehenden Ansprüche beansprucht, bei dem das nässende Mittel ein Gefrierpunktssinkmittel enthält.

6. Verfahren wie in Anspruch 5 beansprucht, bei dem das Gefrierpunktssinkmittel Salz oder Zucker umfaßt.

7. Verfahren wie in einem der vorhergehenden Ansprüche beansprucht, bei dem die Teilchen ein gefrorenes organisches Lösungsmittel umfassen.

8. Verfahren wie in einem der vorhergehenden Ansprüche beansprucht, bei dem das Fluid, die Masse oder das Agglomerat mit einer Geschwindigkeit im Bereich von 0,05 bis 5,0m/s durch das System geleitet werden.

9. Verfahren wie in Anspruch 3 beansprucht, bei dem die Eisteilchen einen mittleren Durchmesser von 1,0mm aufweisen.

10. Verfahren wie in einem der vorhergehenden Ansprüche beansprucht, bei dem das Fluid, die Masse oder das Agglomerat zusätzlich ein chemisches Dekontaminationsmittel umfaßt.

11. Verfahren wie in Anspruch 10 beansprucht, bei dem das chemische Dekontaminationsmittel Salpetersäure, Ethylendiamintetraessigsäure oder Zitronensäure umfaßt.

12. Verfahren wie in einem der vorhergehenden Ansprüche beansprucht, das das Reinigen und das Dekontaminieren von Rohrleitungen umfaßt, die bei der Verarbeitung von verwendetem Kernbrennstoff verwendet werden.

13. Verfahren wie in einem der vorhergehenden Ansprüche beansprucht, das das Entfernen von teilweisen Blockierungen von festen Teilchen umfaßt, die während der Verarbeitung in einer verschachtelten Rohrleitung auftauchen.

14. Verfahren wie in Anspruch 13 beansprucht, das die Entfernung von Zementmörtel von der Rohrleitung in verkapselten Anlagen umfaßt, nach Zuführung des Mörtels in Trommeln von industriellem Abwasser.

15. Verfahren wie in Anspruch 13 beansprucht, das die Entfernung von Ablagerungen umfaßt, die der Zuführung von hochkonzentrierter radioaktiver Flüssigkeit zu einer Verglasungsanlage folgt.

16. Verfahren wie in einem der vorhergehenden Ansprüche beansprucht, das die Entrostung eines spurenaktiven Plattenwärmetauschers umfaßt, der bei der Verarbeitung von radioaktivem Material verwendet wird.

17. Verfahren wie in Anspruch 16 beansprucht, bei dem das radioaktive Material Kühlwasser umfaßt, das in einem Teich zum Speichern von verwendetem Kernbrennstoff verwendet wird.

## Revendications

1. Procédé pour la décontamination de l'intérieur d'un canal d'écoulement fluide utilisé dans le traitement de substances radioactives, **caractérisé en ce qu'**un fluide, une masse ou un agglomérat, consistant essentiellement en des particules solides se cohérant au moyen d'un liquide mouillant, est entraîné à passer le long du canal en contact avec sa surface intérieure.

2. Procédé selon la revendication 1, **caractérisé en ce que** les particules et le liquide mouillant sont aqueux.

3. Procédé selon la revendication 2, **caractérisé en ce que** les particules sont des particules de glace.

4. Procédé selon l'une des revendications 1 à 3, **caractérisé en ce que** le liquide mouillant est, consiste essentiellement en, ou comprend un liquide de fusion dérivé du solide des particules solides.

5. Procédé selon l'une des revendications précédentes, **caractérisé en ce que** l'agent mouillant contient un dépresseur du point de congélation.

6. Procédé selon la revendication 5, **caractérisé en ce que** ledit dépresseur du point de congélation comprend du sel ou du sucre.

7. Procédé selon l'une des revendications précédentes, **caractérisé en ce que** les particules comprennent un solvant organique congelé.

8. Procédé selon l'une des revendications précédentes, **caractérisé en ce que** le fluide, la masse ou l'agglomérat est conduit à travers le système à une vitesse de l'ordre de 0,05 à 5 mètres par seconde.

9. Procédé selon la revendication 3, **caractérisé en ce que** les particules de glace ont un diamètre moyen de 1 mm.

10. Procédé selon l'une des revendications précédentes, **caractérisé en ce que** le fluide, la masse ou l'agglomérat comprend de manière additionnelle un décontaminant chimique.

11. Procédé selon la revendication 10, **caractérisé en ce que** le décontaminant chimique comprend de l'acide nitrique, de l'acide éthylènediaminetétraacétique ou de l'acide citrique.

12. Procédé selon l'une des revendications précédentes, qui comprend le nettoyage et la décontamination de la tuyauterie utilisés dans le retraitement de combustible nucléaire usagé.

13. Procédé selon l'une des revendication précédente, qui comprend l'enlèvement des blocages partiels de particules solides qui apparaissent dans la tuyauterie enroulée durant le retraitement.

14. Procédé selon la revendication 13, qui comprend l'enlèvement du coulis de ciment de la tuyauterie dans les équipements d'encapsulation après alimentation du coulis dans des tambours de déchets de liquides industriels.

15. Procédé selon la revendication 13, qui comprend l'enlèvement des dépôts suite à l'alimentation en liqueur radioactive hautement concentrée à un équipement de vitrification.

16. Procédé selon l'une des revendications précédentes, qui comprend le décalaminage d'un échangeur de chaleur à plaque à trace active utilisé dans le traitement de substances radioactives.

17. Procédé selon la revendication 16, **caractérisé en ce que** la substance radioactive comprend de l'eau en refroidissement utilisée dans un bassin pour le stockage de combustible nucléaire usagé.
